# DEMANDE DE BREVET EUROPEEN

(11) **EP 1 607 790 A1**
(43) Date de publication de la demande: **21.12.2005**
(21) Numéro de dépôt: 04013933.9
(22) Date de dépôt: 15.06.2004
(51) Int. Cl.: G02F 1/1337, G02F 1/139

(54) **Dispositif d'affichage à cristaux liquides comprenant une couche d'alignement hétérogène**

(71) Demandeur: ASULAB S.A., 2074 Marin (CH)
(72) Inventeur: Basturk, Naci, 2073 Enges (CH); Grupp, Joachim, 2073 Enges (CH); Park, Sung Gook, 5314 Kleindoettingen (CH); Padeste, Celestino, 5400 Baden (CH); Schift, Helmut, 5412 Gebenstorf (CH); Scharf, Toralf, 2000 Neuchâtel (CH)
(74) Mandataire: Thérond, Gérard Raymond

(57) **Abrégé**

Dispositif d'affichage à cristaux liquides comprenant un premier substrat avant (4) et un second substrat arrière (6) séparés par un espace (8) délimitant un volume pour le confinement d'une couche de molécules de cristal liquide (10), ces substrats (4, 6) comportant sur leurs faces intérieures en regard un premier et un second groupe d'électrodes (12, 14) respectivement, l'application d'une tension de commande appropriée à des électrodes sélectionnées permettant de modifier localement les propriétés optiques du cristal liquide, ce dispositif d'affichage (2) comprenant en outre une couche d'alignement hétérogène (16) ménagée sur la face intérieure de l'un au moins des deux substrats (4, 6), cette couche d'alignement (16) comprenant un film (22) qui induit soit un alignement planaire, soit un alignement homéotrope des molécules de cristal liquide et sur lequel est structuré un réseau périodique de motifs élémentaires (20) qui induisent un alignement homéotrope des molécules de cristal liquide si le film (22) induit un alignement planaire de ces molécules ou un alignement planaire si le film (22) induit un alignement homéotrope, ledit dispositif d'affichage (2) étant caractérisé en ce que :
- le pas (P₁) avec lequel se répètent les motifs élémentaires (20) selon une première direction (x) est supérieur ou égal au pas (P₂) avec lequel ces mêmes motifs élémentaires (20) se répètent selon une seconde direction (y) non parallèle à la première direction (x);
- le pas (P₁) avec lequel se répètent les motifs élémentaires (20) selon la première direction (x) est inférieur à l'espace (8) séparant les deux substrats (4, 6), et en ce que:
   - la surface des motifs élémentaires (20) va en diminuant selon une troisième direction qui peut se confondre avec l'une des première ou seconde directions (x, y).

## Description

La présente invention concerne un dispositif d'affichage à cristaux liquides du type comprenant un premier substrat avant et un second substrat arrière séparés par un espace délimitant un volume pour le confinement d'une couche de cristal liquide, une couche d'alignement hétérogène étant ménagée sur l'un au moins des deux substrats.

Toutes les applications des cristaux liquides reposent sur le principe simple que les cristaux liquides peuvent facilement être alignés par un traitement adéquat des surfaces de contact. Un meilleur contrôle de l'alignement des cristaux liquides est donc l'un des aspects clés pour les nouvelles générations d'afficheurs plats.

On a souvent recours à des traitements chimiques uniformes de surface pour induire un alignement homéotrope des molécules de cristal liquide au droit des substrats d'une cellule d'affichage à cristaux liquides. On peut également, par le biais d'interactions chimiques, obtenir un alignement planaire des molécules de cristal liquide. Cependant, l'alignement ainsi obtenu n'est pas univoque ou unidirectionnel mais dégénéré, c'est-à-dire que toutes les orientations des molécules de cristal liquide dans le plan sont possibles. On appelle un tel alignement "alignement planaire inhomogène". Pour lever la dégénérescence d'orientation des molécules de cristal liquide dans le plan, on soumet les couches d'alignement à un frottement mécanique pour induire une orientation préférentielle des molécules de cristal liquide. Cette orientation préférentielle est souvent appelée "axe facile" (ou "easy axe" en terminologie anglo-saxonne) des molécules de cristal liquide. Les molécules de cristal liquide s'alignent donc parallèlement à l'axe facile. Outre l'orientation azimutale des molécules de cristal liquide, le frottement mécanique des couches d'alignement permet également habituellement de contrôler l'orientation polaire, autrement dit l'angle de tilt, de ces molécules. Ainsi, grâce au frottement mécanique de certaines couches d'alignement, on peut obtenir un alignement univoque des molécules de cristal liquide à la surface de ces couches. Des angles de tilt reproductibles allant jusqu'à 20° sont couramment obtenus. Le procédé classique de frottement des couches d'alignement présente cependant certains inconvénients. Il peut être la cause de la pollution desdites couches d'alignement par des corps étrangers et provoquer l'apparition de charges électrostatiques pendant la fabrication, facteurs qui nuisent au bon fonctionnement des cellules à cristaux liquides résultantes et qui conduisent à des taux de rebut non négligeables.

On a tenté, par le passé, d'induire un alignement tilté des molécules de cristal liquide au moyen d'une surface d'alignement hétérogène, c'est-à-dire une surface d'alignement obtenue en créant des îlots homéotropes dans une surface à ancrage planaire. Les dimensions de ces îlots et la distance qui les séparait devaient être nettement plus petites que l'épaisseur de la couche de cristal liquide afin d'induire un alignement macroscopique uniforme. Pour une forme sensiblement circulaire des îlots et une distribution aléatoire de ces îlots sur la surface de la couche d'alignement, on a observé un alignement conique des molécules de cristal liquide. Autrement dit, l'angle polaire que faisaient les molécules de cristal liquide par rapport à la normale au plan d'alignement était fixe, tandis que l'angle azimutal que faisait la projection du directeur des molécules de cristal liquide dans le plan d'alignement était libre. En imposant une anisotropie moyenne de forme aux îlots (ellipse) de même qu'une orientation préférentielle de ces ellipses, on a abouti à un alignement tilté bidirectionnel des molécules de cristal liquide, c'est-à-dire que les molécules s'orientaient parallèlement à cette orientation préférentielle avec un angle de tilt ou angle polaire positif ou négatif. Des résultats similaires ont été obtenus avec une couche d'alignement formée d'une succession de bandes induisant alternativement un ancrage planaire ou un ancrage homéotrope. Toutefois, l'intérêt d'un alignement conique ou bidirectionnel des molécules de cristal liquide dans des afficheurs est très limité.

La présente invention a pour but de procurer une cellule d'affichage à cristaux liquides comprenant une couche d'alignement hétérogène des molécules de cristal liquide permettant d'obvier les inconvénients susmentionnés des couches d'alignement de l'art antérieur.

A cet effet, la présente invention a pour objet un dispositif d'affichage à cristaux liquides comprenant un premier substrat avant et un second substrat arrière séparés par un espace délimitant un volume pour le confinement d'une couche de molécules de cristal liquide, ces substrats comportant sur leurs faces intérieures en regard un premier et un second groupe d'électrodes respectivement, l'application d'une tension de commande appropriée à des électrodes sélectionnées permettant de modifier localement les propriétés optiques du cristal liquide, ce dispositif d'affichage comprenant en outre une couche d'alignement hétérogène ménagée sur la face intérieure de l'un au moins des deux substrats, cette couche d'alignement comprenant un film qui induit soit un alignement planaire, soit un alignement homéotrope des molécules de cristal liquide et sur lequel est structuré un réseau périodique de motifs élémentaires qui induisent un alignement homéotrope des molécules de cristal liquide si le film induit un alignement planaire de ces molécules ou un alignement planaire si le film induit un alignement homéotrope, ledit dispositif d'affichage étant caractérisé en ce que :
- le pas avec lequel se répètent les motifs élémentaires selon une première direction est supérieur ou égal au pas avec lequel ces mêmes motifs élémentaires se répètent selon une seconde direction non parallèle à la première direction;
- le pas avec lequel se répètent les motifs élémentaires selon la première direction rectiligne est inférieur à l'espace séparant les deux substrats;
- la surface des motifs élémentaires va en diminuant selon une troisième direction qui peut se confondre avec l'une des première ou seconde directions.

Grâce à ces caractéristiques, la présente invention procure un dispositif d'affichage à cristaux liquides comprenant une couche d'alignement hétérogène ménagée sur la face intérieure de l'un au moins des deux substrats et permettant de contrôler simultanément l'orientation polaire et l'orientation azimutale des molécules de cristal liquide. L'alignement des molécules de cristal liquide ainsi obtenu est un alignement univoque ou unidirectionnel, ce qui signifie que l'orientation polaire et l'orientation azimutale des molécules de cristal liquide sont les mêmes dans tout le volume de la cellule.

Un dispositif d'affichage à cristaux liquides selon l'invention présente un aspect optique homogène, dépourvu de domaines orientés différemment qui constituent habituellement autant de défauts d'affichage visibles à l'oeil nu entre polariseurs croisés. Grâce à la possibilité qu'elle offre de contrôler l'angle de tilt des molécules de cristal liquide, la présente invention permet de réaliser des cellules d'affichage bistables dans lesquelles les molécules de cristal liquide peuvent être commutées entre deux positions déterminées. L'invention peut également s'appliquer à la réalisation de cellules hybrides ou de cellules "Super Twist Nematic" (STN) à angle de tilt et de twist élevés qui ont comme avantage de présenter une vitesse de commutation élevée et de pouvoir être plus facilement multiplexées. Dans le cas de cellules à alignement homéotrope tilté, on peut utiliser des cristaux liquides à anisotropie diélectrique négative. Les cellules résultantes présentent une vitesse de commutation élevée, un bon angle de vue de même qu'un excellent contraste.

L'angle de tilt des molécules de cristal liquide dépend du rapport entre les surfaces des domaines qui induisent un alignement planaire et des domaines qui induisent un alignement homéotrope. Dans le cas de l'égalité entre les surfaces de ces deux types de domaines, on observe un angle de tilt sensiblement égal à 45°. Quant à l'orientation azimutale des molécules de cristal liquide, elle est contrôlée par l'orientation et la géométrie des domaines. Il semble en outre que l'orientation azimutale des molécules de cristal liquide soit influencée par la présence des lignes de jonction entre les domaines à énergies potentielles de surface différentes.

La présente invention concerne également un procédé de fabrication d'un dispositif d'affichage à cristaux liquides comprenant les étapes consistant à :
- se munir d'un premier substrat avant et d'un deuxième substrat arrière séparés par un espace délimitant un volume de confinement dans lequel on introduit une couche de cristal liquide;
- structurer sur les faces intérieures en regard des premier et second substrats un premier et un second groupes d'électrodes respectivement;
- déposer sur la face intérieure de l'un au moins des deux substrats une couche d'alignement hétérogène comprenant un film qui induit soit un alignement planaire, soit un alignement homéotrope des molécules de cristal liquide, et
- structurer sur le film un réseau périodique de motifs élémentaires qui induisent un alignement homéotrope des molécules de cristal liquide si le film induit un alignement planaire de ces molécules ou un alignement planaire si le film induit un alignement homéotrope,
le procédé de fabrication comprenant en outre les étapes consistant à :
- structurer les motifs élémentaires selon une première direction avec un pas supérieur ou égal au pas avec lequel ces mêmes motifs élémentaires sont répétés selon une seconde direction non parallèle à la première direction;
- structurer les motifs élémentaires selon la première direction avec un pas inférieur à l'espace séparant les deux substrats, et
- structurer les motifs élémentaires de façon que leur surface va en diminuant selon une troisième direction qui peut se confondre avec l'une des première ou seconde directions.

Selon une première variante de mise en oeuvre du procédé, on ajuste l'orientation polaire des molécules de cristal liquide en modulant la densité de couverture, c'est-à-dire le rapport entre la quantité de matériau induisant un alignement homéotrope déposée et la quantité maximale de matériau induisant un alignement homéotrope qu'il est possible de déposer par unité de surface.

Selon une seconde variante de mise en oeuvre du procédé, on ajuste l'orientation polaire des molécules de cristal liquide en modulant le rapport de surface entre les domaines qui induisent un alignement homéotrope et les domaines qui induisent un alignement planaire.

Selon une caractéristique complémentaire de l'invention, la structuration de la couche d'alignement hétérogène comprend les étapes consistant à :
- se munir d'un tampon présentant une structure en relief dont l'image correspond à celle du réseau recherché;
- déposer successivement sur le substrat une couche d'un matériau induisant un alignement planaire des molécules de cristal liquide, puis une couche d'un matériau dans laquelle l'image de la structure en relief peut être transférée;
- empreindre la couche de matériau thermoplastique au moyen du tampon pour transférer l'image de la structure en relief dans ladite couche de matériau;
- démouler le tampon de sorte que la couche de matériau présente une succession de tranchées;
- éliminer par attaque ionique le reliquat de matériau thermoplastique qui subsiste dans le fond des tranchées;
- déposer en phase gazeuse ou à partir d'une solution une couche de matériau induisant un alignement homéotrope, et
- éliminer par arrachement ou par dissolution le matériau thermoplastique résiduel.

D'autres caractéristiques et avantages de la présente invention ressortiront plus clairement de la description détaillée qui suit d'un mode de réalisation du dispositif d'affichage à cristaux liquides selon l'invention, cet exemple étant donné à titre purement illustratif et non limitatif seulement en liaison avec le dessin annexé sur lequel :
- la figure 1 est une représentation schématique d'une molécule de cristal liquide sur laquelle sont représentés les orientations polaire et azimutale ainsi que l'angle de tilt de la molécule;
- la figure 2 est une représentation schématique en coupe d'une cellule d'affichage à cristaux liquides selon l'invention;
- la figure 3 est une vue en plan d'une couche d'alignement hétérogène comprenant des premières et des secondes zones qui alternent périodiquement et qui induisent respectivement un alignement planaire et un alignement homéotrope des molécules de cristal liquide;
- les figures 4A à 4E sont des vues schématiques illustrant les différentes étapes du procédé de fabrication de la couche d'alignement hétérogène représentée à la figure 3;
- la figure 5 est une courbe représentant la variation de l'orientation polaire ou angle de tilt des molécules de cristal liquide en fonction de la densité de couverture du matériau induisant un alignement homéotrope;
- les figures 6A et 6B sont des vues en perspective d'un domaine élémentaire induisant un alignement planaire des molécules de cristal liquide et présentant des zones en relief;
- la figure 7 est un graphe qui montre les variations des gradients des largeurs des domaines de la figure 3 en fonction de x;
- la figure 8A est une vue partielle en plan d'une couche d'alignement hétérogène comprenant des domaines qui induisent respectivement des alignements planaire et homéotrope des molécules de cristal liquide et qui se répètent périodiquement avec un même pas selon les directions x, y;
- la figure 8B est un graphe qui montre les variations des gradients des largeurs des domaines de la figure 8A en fonction de z;
- la figure 9A est une vue partielle en plan d'une couche d'alignement hétérogène selon l'invention comprenant encore une autre forme de domaines, et
- la figure 9B est un graphe qui montre les variations des gradients des largeurs des domaines de la figure 9A en fonction de x.

La présente invention procède de l'idée générale inventive qui consiste à munir l'une au moins des faces en regard de deux substrats d'une cellule d'affichage à cristal liquide d'une couche d'alignement dite hétérogène, c'est-à-dire formée d'une alternance périodique de premiers et de seconds domaines qui induisent respectivement un alignement planaire et un alignement homéotrope des molécules de cristal liquide. De cette façon, l'alignement de ces molécules est univoque dans le volume de la cellule, c'est-à-dire que l'orientation polaire et l'orientation azimutale sont sensiblement les mêmes pour toutes lesdites molécules de cristal liquide. Ce résultat est atteint à la double condition que les domaines se répètent avec une périodicité selon une première direction qui soit supérieure ou égale à la périodicité avec laquelle ces mêmes domaines se répètent selon une seconde direction différente de la première direction et que les domaines, présentent un gradient de surface selon une troisième direction qui peut se confondre avec l'une ou l'autre des première et seconde directions.

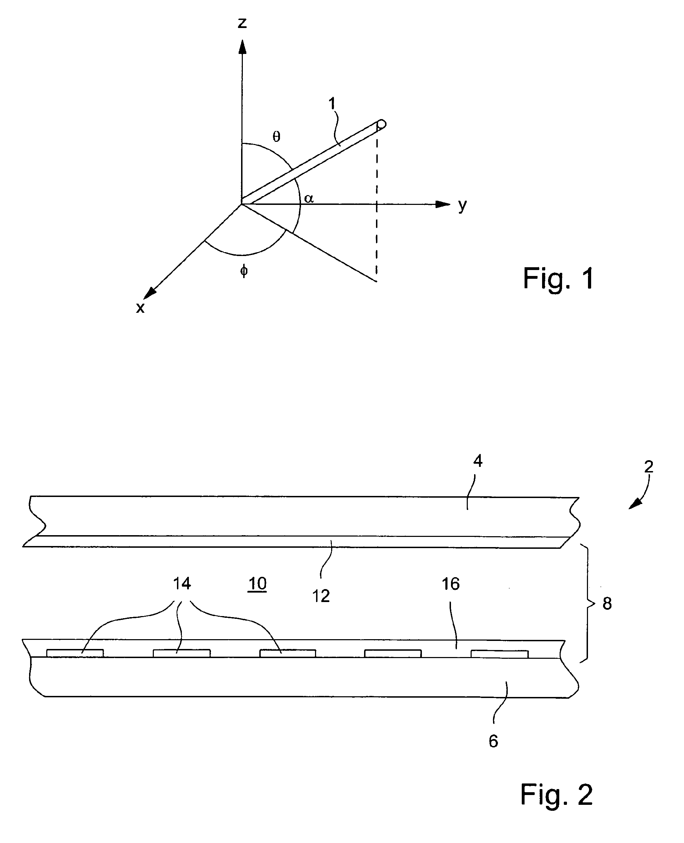

La figure 1 est une représentation schématique d'une molécule de cristal liquide 1 qui se présente sous une forme généralement cylindrique et dont la position dans l'espace est déterminée relativement à un repère orthogonal à trois dimensions x, y, z. La molécule de cristal liquide 1 forme avec l'axe z un angle θ appelé orientation polaire dont le complément est appelé angle de tilt α de ladite molécule 1, tandis que la projection de la molécule 1 dans le plan x, y forme avec l'axe x un angle φ appelé orientation azimutale de cette molécule.

La figure 2 est une vue en coupe d'une partie d'une cellule d'affichage à cristal liquide selon l'invention. Désignée dans son ensemble par la référence numérique générale 2, cette cellule comprend un premier substrat avant 4 et un second substrat arrière 6 séparés par un intervalle 8 délimitant un volume pour le confinement d'une couche 10 de cristaux liquides. Les substrats 4 et 6 comportent sur leurs faces en regard un premier et un second groupes d'électrodes, respectivement 12 et 14, agencés de façon que l'application d'une tension de commande appropriée à des électrodes sélectionnées permette de modifier localement les propriétés optiques du cristal liquide. La cellule d'affichage 2 selon l'invention comprend en outre une couche d'alignement hétérogène 16 ménagée sur la face intérieure de l'un au moins des substrats 4 et 6 et décrite en détail ci-dessous. La cellule d'affichage 2 comprend encore d'autres éléments nécessaires à son fonctionnement tels que, notamment, des polariseurs, des films retardateurs, des réflecteurs et autres mais qui ne seront pas décrits ici dans la mesure où ils ne jouent aucun rôle dans le cadre de la présente invention et qu'ils sont bien connus de l'homme du métier.

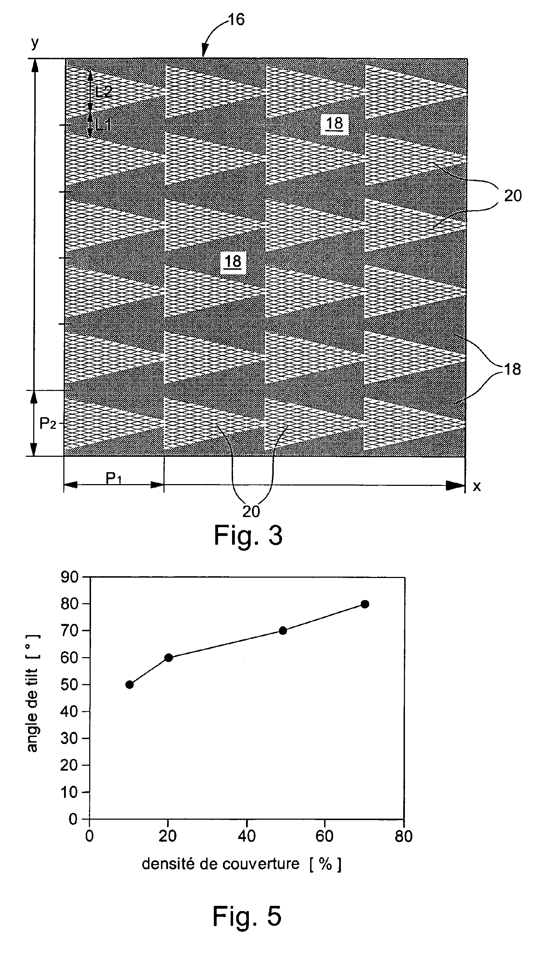

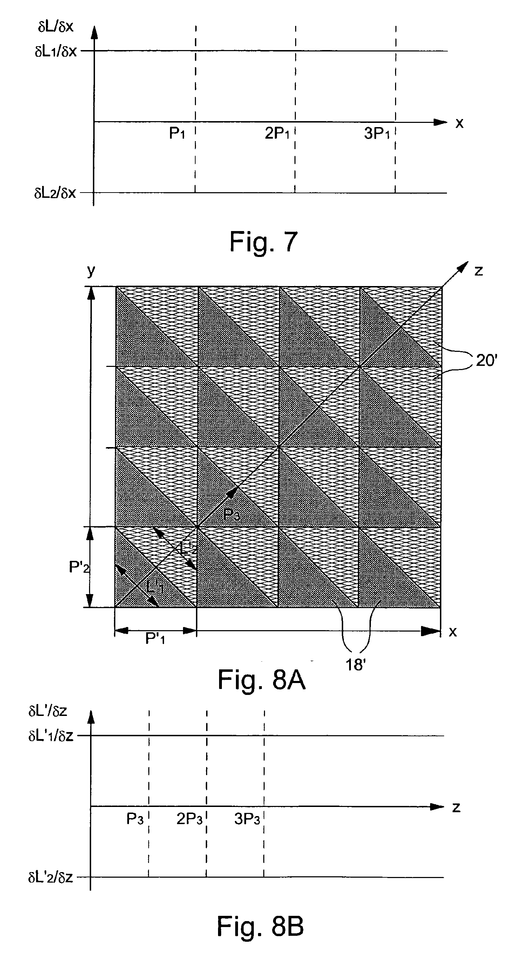

Comme on peut le voir à l'examen de la figure 3, la couche d'alignement 16 est une couche d'alignement du type hétérogène comprenant une pluralité de premiers et de seconds domaines 18 et 20 qui alternent périodiquement et qui induisent, respectivement, un alignement planaire et un alignement homéotrope des molécules de cristal liquide. On rappellera à toutes fins utiles que les molécules de cristal liquide sont disposées selon un alignement planaire lorsqu'elles s'étendent sensiblement parallèlement aux substrats d'une cellule, et que leur agencement est dit homéotrope lorsque les molécules s'étendent sensiblement perpendiculairement au plan des substrats de la cellule. Dans l'exemple représenté au dessin, les domaines 20 qui induisent un alignement homéotrope des molécules de cristal liquide ont tous les mêmes formes et dimensions, en l'espèce des triangles isocèles, et se répètent avec un pas P₁ selon une première direction rectiligne x qui est supérieur au pas P₂ avec lequel ces mêmes domaines 20 se répètent selon une seconde direction rectiligne y perpendiculaire à la direction x. Dans le cas présent, le pas P₁ est égal à 286 nm, tandis que le pas P₂ est de l'ordre de 190 nm. Pour un bon fonctionnement du dispositif d'affichage 2 selon l'invention, le pas P₁ avec lequel se répètent les motifs élémentaires 20 qui induisent un alignement homéotrope des molécules de cristal liquide doit être sensiblement inférieur à l'espace 8 séparant les deux substrats 4 et 6 de la cellule 2 dont les valeurs couramment observées sont comprises entre 4 et 9 µm. C'est pourquoi la valeur maximale préférée du pas P₁ sera inférieure à 1 µm et, préférentiellement encore, inférieure à 0,5 µm. Comme on peut encore le constater à l'examen de la figure 3, la surface des domaines 20 va en diminuant selon la direction x, ceci afin de fixer l'orientation azimutale des molécules de cristal liquide. En se référant à la figure 3, on appelle L₁ la largeur des domaines 18 et L₂ la largeur des domaines 20. Le sens de variation ou gradient δL₁/δx de la largeur L₁ en fonction de x est constant et positif comme représenté à la figure 7. Inversement, le gradient δL₂/δx de la largeur L₂ est constant et négatif, ce qui se comprend facilement dans la mesure où les domaines 20 sont les compléments des domaines 18. Quant à l'orientation polaire ou angle de tilt des molécules de cristal liquide, elle est fixée par le rapport des surfaces des domaines 18 et 20 comme il sera décrit plus en détail ci-dessous.

On comprendra bien entendu que l'exemple de couche d'alignement hétérogène illustré en liaison avec la figure 3 est donné à titre purement illustratif et non limitatif seulement. En particulier, il n'est pas nécessaire que les domaines 20 soient disposés à la suite les uns des autres selon un agencement matriciel. Il se pourrait aussi bien que les domaines 20 soient disposés en quinconce. De même, les domaines 20 peuvent être ordonnés périodiquement selon deux directions non nécessairement orthogonales.

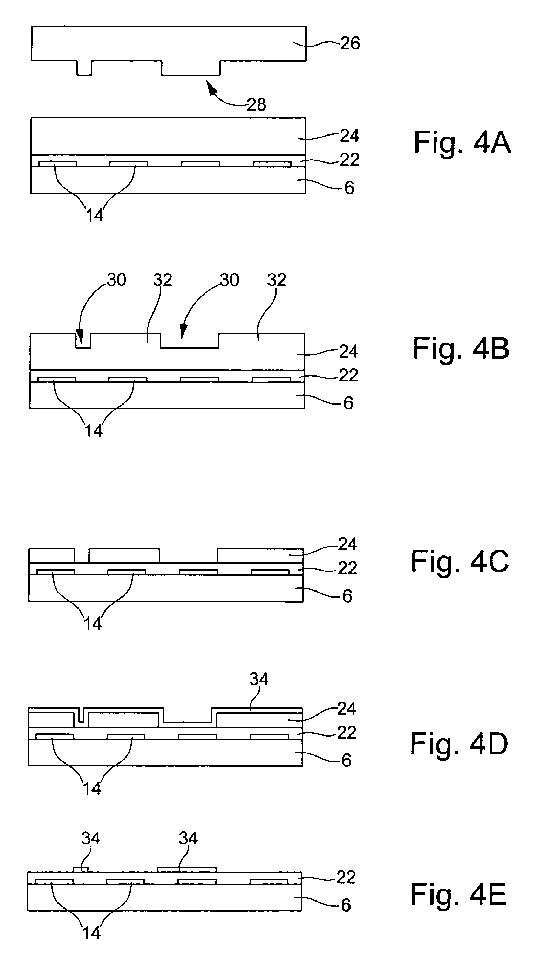

On examine maintenant en liaison avec les figures 4A à 4E les différentes étapes du procédé de fabrication de la couche d'alignement hétérogène 16 illustrée à la figure 3.

La figure 4A illustre l'étape d'estampage à chaud. Le substrat 6, par exemple en verre, est recouvert d'une mince couche électriquement conductrice, par exemple en oxyde d'indium-étain (ITO) aux endroits où se trouvent les électrodes 14. Toute la surface du substrat 6 est ensuite recouverte d'un film 22 d'un matériau induisant un alignement planaire des molécules de cristal liquide tel que l'oxyde de silicium, le ZrO₂, l'Al₂O₃, le CaF₂, un polyimide, un polyamide-imide, un polyphénylène ou un polyamide. L'épaisseur du film 22 est typiquement comprise entre 10 et 100 nm. Le film 22 devra être aussi mince que possible aux endroits où il recouvre le film d'ITO afin de ne pas provoquer une diminution du champ électrique servant à la commande des molécules de cristal liquide au point de croisement de deux électrodes données. Le film 22 est ensuite recouvert d'une couche 24 d'un matériau thermoplastique tel que du PMMA (polyméthyl méthacrylate) dont le poids moléculaire est de 25 kg/mole. A la place du PMMA, on peut avoir recours à d'autres matériaux thermoplastiques utilisés dans le domaine de l'estampage à chaud tels que les polyacrylates, les polycarbonates, les polyamides ou autres. On se munit ensuite d'un tampon 26 présentant une structure en relief 28 dont l'image correspond à l'agencement des domaines 18 et 20 recherché. Le tampon 26 est obtenu par réplication d'un masque maître réalisé par écriture au moyen d'un faisceau d'électrons (résolution de l'ordre de 10 nm) ou par interférence laser (résolution à partir de 250 nm selon la longueur d'onde du faisceau laser utilisé). Le tampon 26 est appliqué à chaud et sous pression contre la couche 24 de matériau thermoplastique de manière à transférer l'image de la structure en relief dans ladite couche de matériau 24.

La figure 4B représente l'étape de démoulage du tampon 26 de sorte que la couche de matériau thermoplastique 24 présente une succession de tranchées 30 délimitées par des buttes 32.

A la figure 4C, on procède à l'élimination par attaque ionique du reliquat de matériau thermoplastique subsistant dans le fond des tranchées 30 de façon à mettre à jour le film 22 sous-jacent de matériau induisant un alignement planaire. L'attaque peut se faire de façon à créer des structures symétriques ou asymétriques.

A la figure 4D, on procède au dépôt en phase vapeur d'une couche 34 de matériau induisant un alignement homéotrope des molécules de cristal liquide. Le matériau choisi est un silane fluoré ((tridecafluoro-1,1,2,2-tetrahydrooctyl) trichlorosilane). Le film 22 de matériau induisant un alignement planaire sert de couche d'accrochage au silane fluoré. L'épaisseur de la couche 34 de silane fluoré est de l'ordre de 1 à 3 nm, ce qui correspond sensiblement à la longueur moyenne des molécules de silane. A la place du silane fluoré donné comme exemple, d'autres matériaux connus de l'homme du métier tels que les silanes à longue chaîne d'alkyl fluorée ou non, les silanes ayant différentes fonctionnalités (mono, bi ou trifonctionnels) ou des mélanges de ces deux types de matériaux peuvent également être utilisés. On peut également citer les acides, les alcools, les amines, les amides, les complexes métalliques et les surfactants ayant au moins une longue chaîne alkyl fluorée ou non et capables d'orienter la longue chaîne des molécules de cristal liquides lorsqu'ils sont fixés sur la surface. Ces derniers matériaux peuvent être utilisés seuls ou en combinaison.

Enfin, à la figure 4 E, on procède à l'élimination par arrachement (opération mieux connue sous sa dénomination angto-saxonne "lift-off") ou-par dissolution de la couche 24 de matériau thermoplastique résiduelle. On obtient ainsi une succession de domaines qui induisent alternativement un alignement planaire et un alignement homéotrope des molécules de cristal liquides.

La structuration appropriée de la couche d'alignement hétérogène peut être réalisée selon d'autres procédés. A titre d'exemple, un procédé mis en oeuvre à température ambiante ou à relativement basse température et à une pression de l'ordre de un bar consiste à déposer sur le film 22 un produit photopolymérisable ou thermodurcissable à l'état plus ou moins liquide sur lequel le tampon est appliqué pour transférer l'image désirée. On effectue la polymérisation au moyen d'un rayonnement actinique adéquat tel que la lumière visible, les rayons ultraviolets, les rayons X, un faisceau d'électrons ou par simple chauffage durant l'application du tampon. Les structures sont ainsi transférées dans le film 22, le reste du procédé étant similaire à celui décrit précédemment. Comme matériau photopolymérisable, on peut utiliser des acrylates, des méthacrylates, des vinyles, des thioénols, des esters non saturés et d'autres produits encore connus de l'homme du métier. Comme matériau thermodurcissable, on peut utiliser les époxydes, les polyuréthanes ou d'autres matériaux thermodurcissables connus de l'homme du métier. Comme tampon, on peut utiliser une copie du master réalisée soit en un matériau métallique tel que le nickel (la copie est mieux connue sous sa dénomination anglo-saxonne "nickel shim"), soit en un matériau non métallique tel que les polymères thermodurcissables, les thermoplastiques ou des élastomères.

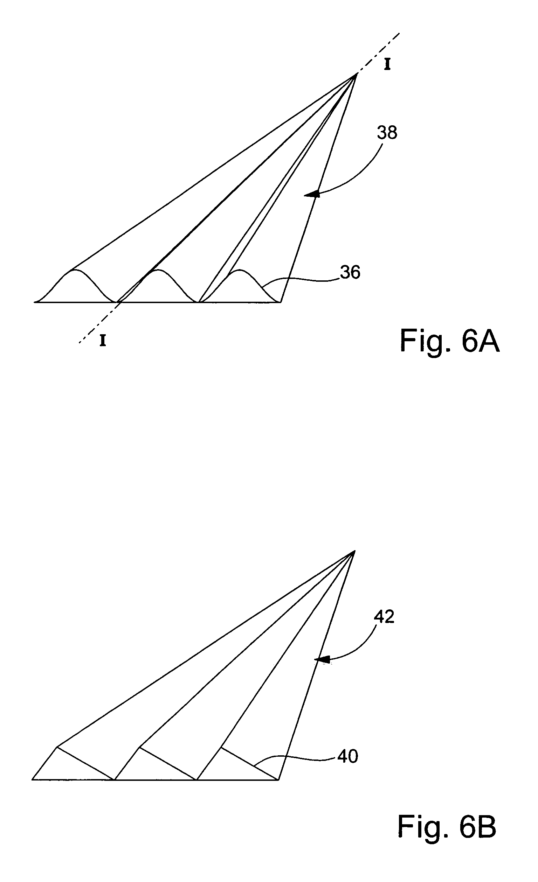

L'orientation polaire ou angle de tilt des molécules de cristal liquide est influencée par le rapport entre la surface des domaines qui induisent un alignement planaire et la surface des domaines qui induisent un alignement homéotrope. L'angle de tilt est également influencé par la densité de couverture du matériau induisant un alignement homéotrope, autrement dit par le rapport entre la quantité de matériau induisant un alignement homéotrope déposée et la quantité maximum de ce matériau qu'il est possible de déposer par unité de surface. On a représenté à la figure 5 les variations en degrés de l'angle de tilt en fonction de la valeur en pourcentage de la densité de couverture du matériau induisant un alignement homéotrope (silane fluoré). La courbe illustrée à la figure 5 a été établie pour un rapport de surface entre les domaines qui induisent un alignement planaire et ceux qui induisent un alignement homéotrope égal à 1.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, il peut être envisagé que tes domaines qui induisent un alignement planaire des molécules de cristal liquide présentent des zones en relief ayant une topographie déterminée comme illustré aux figures 6A et 6B. Un tel réseau, mieux connu sous sa dénomination anglo-saxonne de "grating", peut être symétrique (figure 6A) ou asymétrique (figure 6B). Dans le cas d'un réseau symétrique, le profil périodique 36 de la structure en relief 38 présente une symétrie longitudinale selon l'axe I-I entre le passage par deux maxima ou deux minima successifs. Un réseau asymétrique est, quant à lui, un réseau périodique 40 dépourvu d'axe de symétrie. Dans les exemples illustrés aux figures 6A et 6B, le profil périodique 36, 40 des structures en relief 38, 42 s'étend selon une seule direction. On peut aussi envisager de combiner deux réseaux de ce type dont les profils s'étendent selon deux directions non parallèles, par exemple espacées de 90° l'une de l'autre. On parlera alors de réseau double ou de "bi-grating" en terminologie anglo-saxonne. Bien entendu, il est possible de combiner un réseau symétrique et un réseau asymétrique.

La figure 8A est une vue partielle en plan d'une couche d'alignement hétérogène comprenant des domaines 18' et 20' qui induisent respectivement un alignement planaire et un alignement homéotrope des molécules de cristal liquide. Dans ce cas, le pas P'₁ avec lequel les motifs 20' se répètent selon la direction x est égal au pas P'₂ avec lequel ces mêmes motifs 20' se répètent selon la direction y perpendiculaire à la direction x. D'autre part, la surface desdits motifs 20' va en décroissant avec une périodicité P₃ selon une troisième direction z qui forme un angle de 45° avec la direction x. On appelle L'₁ la largeur des domaines 18' et L'₂ la largeur des domaines 20'. Le gradient δL'₁/δz de la largeur L'₁ en fonction de z est constant et positif comme représenté à la figure 8B. Inversement, le gradient δL'₂/δz de la largeur L'₂ est constant et négatif, ce qui se comprend facilement dans la mesure où les domaines 20' sont les compléments des domaines 18'.

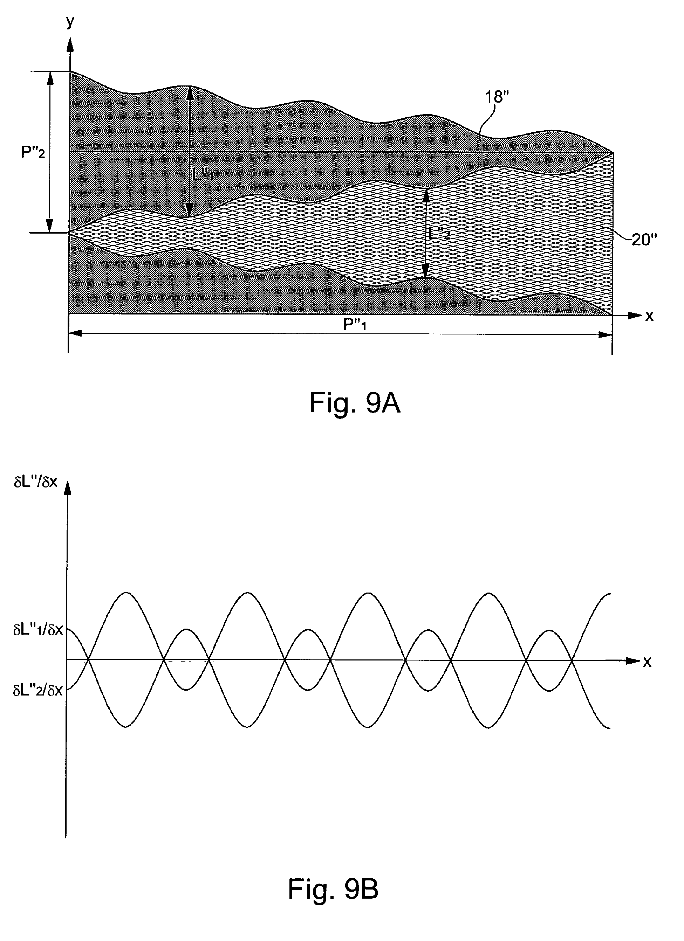

La figure 9A est une vue partielle en plan d'une couche d'alignement hétérogène selon l'invention comprenant encore une autre forme de domaines. On voit à l'examen de cette figure que la surface des domaines 20" qui induisent un alignement homéotrope des molécules de cristal liquide va généralement en croissant selon la direction x mais qu'elle présente une succession de maxima et de minima, chaque maximum (respectivement minimum) étant plus proche de l'axe x que le maximum (respectivement le minimum) précédent. En appelant respectivement L"₁ et L"₂ la largeur des domaines 18" et 20", les variations des gradients δL"₁/δx et δL"₂/δx sont telles que représentées à la figure 9B. Les gradients moyens sont respectivement positif et négatif.

## Revendications

1. Dispositif d'affichage à cristaux liquides comprenant un premier substrat avant (4) et un second substrat arrière (6) séparés par un espace (8) délimitant un volume pour le confinement d'une couche de molécules de cristal liquide (10), ces substrats (4, 6) comportant sur leurs faces intérieures en regard un premier et un second groupe d'électrodes (12, 14) respectivement, l'application d'une tension de commande appropriée à des électrodes sélectionnées permettant de modifier localement les propriétés optiques du cristal liquide, ce dispositif d'affichage (2) comprenant en outre une couche d'alignement hétérogène (16) ménagée sur la face intérieure de l'un au moins des deux substrats (4, 6), cette couche d'alignement (16) comprenant un film (22) qui induit soit un alignement planaire, soit un alignement homéotrope des molécules de cristal liquide et sur lequel est structuré un réseau périodique de motifs élémentaires (20) qui induisent un alignement homéotrope des molécules de cristal liquide si le film (22) induit un alignement planaire de ces molécules ou un alignement planaire si le film (22) induit un alignement homéotrope, ledit dispositif d'affichage (2) étant **caractérisé en ce que** :
- le pas (P₁) avec lequel se répètent les motifs élémentaires (20) selon une première direction (x) est supérieur ou égal au pas (P₂) avec lequel ces mêmes motifs élémentaires (20) se répètent selon une seconde direction (y) non parallèle à la première direction (x);
- le pas (P₁) avec lequel se répètent les motifs élémentaires (20) selon la première direction (x) est inférieur à l'espace (8) séparant les deux substrats (4, 6), et **en ce que** :
- la surface des motifs élémentaires (20) va en diminuant selon une troisième direction qui peut se confondre avec l'une des première ou seconde directions (x, y).

2. Dispositif d'affichage selon la revendication 1, **caractérisé en ce que** la largeur des motifs élémentaires (20) selon une direction donnée présente un gradient de variation constant.

3. Dispositif d'affichage selon la revendication 1, **caractérisé en ce que** la largeur des motifs élémentaires (20) selon une direction donnée présente un gradient variable.

4. Dispositif d'affichage selon l'une quelconque des revendications 1 à 3, **caractérisé en ce que** les motifs élémentaires qui induisent un alignement planaire des molécules de cristal liquide présentent des zones en relief ayant une topographie déterminée.

5. Dispositif d'affichage selon la revendication 4, **caractérisé en ce que** les zones en relief sont formées d'au moins un réseau périodique symétrique ou asymétrique, ou d'une combinaison de deux réseaux de même type ou de types différents qui s'étendent selon deux directions non parallèles.

6. Dispositif d'affichage selon l'une quelconque des revendications 1 à 5, **caractérisé en ce que** les motifs élémentaires (20) sont disposés selon un agencement matriciel ou en quinconce.

7. Dispositif d'affichage selon l'une quelconque des revendications 1 à 6, **caractérisé en ce que** le film (22) est réalisé en un matériau appartenant au groupe formé par le dioxyde de silicium, le ZrO₂, l'Al₂O₃, le CaF₂, les polyimides, les polyamides-imides, les polyphénylènes et les polyamides et **en ce que** les motifs élémentaires (20) sont réalisés en un matériau ou une combinaison de matériaux appartenant au groupe formé par le silane fluoré, les silanes à longue chaîne d'alkyl fluorée ou non, les silanes mono, bi ou trifonctionnels ou en un matériau ou une combinaison de matériaux appartenant au groupe formé par les acides, les alcools, les amines, les amides, les complexes métalliques et les surfactants ayant au moins une longue chaîne alkyl fluorée ou non, et **en ce que** le matériau thermoplastique appartient au groupe formé par le polyméthyl méthacrylate, les polyacrylates, les polycarbonates et les polyamides.

8. Dispositif d'affichage selon la revendication 7, **caractérisé en ce que** le silane fluoré est un (tridecafluoro-1,1,2,2-tetrahydrooctyl) trichlorosilane.

9. Dispositif d'affichage selon l'une quelconque des revendications 1 à 8, **caractérisé en ce que** la valeur maximale préférée du pas (P₁) est inférieure à 1 µm et, préférentiellement encore, inférieure à 0,5 µm.

10. Procédé de fabrication d'un dispositif d'affichage à cristaux liquides (2) comprenant les étapes consistant à :
- se munir d'un premier substrat avant (4) et d'un deuxième substrat arrière (6) séparés par un espace (8) délimitant un volume de confinement dans lequel on introduit une couche de cristal liquide (10);
- structurer sur les faces intérieures en regard des premier et second substrats (4, 6) un premier et un second groupes d'électrodes (12, 14) respectivement;
- déposer sur la face intérieure de l'un au moins des deux substrats (12, 14) une couche d'alignement hétérogène (16) comprenant un film (22) qui induit soit un alignement planaire, soit un alignement homéotrope des molécules de cristal liquide, et
- structurer sur le film (22) un réseau périodique de motifs élémentaires (20) qui induisent un alignement homéotrope des molécules de cristal liquide si le film (22) induit un alignement planaire de ces molécules ou un alignement planaire si le film (22) induit un alignement homéotrope,
le procédé de fabrication comprenant en outre les étapes consistant à :
- structurer les motifs élémentaires (20) selon une première direction (x) avec un pas (P₁) supérieur ou égal au pas (P₂) avec lequel ces mêmes motifs élémentaires (20) sont répétés selon une seconde direction (y) non parallèle à la première direction (x);
- structurer les motifs élémentaires (20) selon la première direction (x) avec un pas (P₁) inférieur à l'espace (10) séparant les deux substrats (4, 6), et
- structurer les motifs élémentaires (20) de façon que leur surface va en diminuant selon une troisième direction qui peut se confondre avec l'une des première ou seconde directions (x, y).

11. Procédé de fabrication selon la revendication 10, **caractérisé en ce qu'**on ajuste l'orientation polaire (θ) des molécules de cristal liquide (1) en modulant la densité de couverture, c'est-à-dire le rapport entre la quantité de matériau induisant un alignement homéotrope déposée et la quantité maximale de matériau induisant un alignement homéotrope qu'il est possible de déposer par unité de surface.

12. Procédé de fabrication selon l'une quelconque des revendications 10 ou 11, **caractérisé en ce qu'**on ajuste l'orientation polaire (θ) des molécules de cristal liquide (1) en modulant le rapport de surface entre les domaines (20) qui induisent un alignement homéotrope et les domaines (18) qui induisent un alignement planaire.

13. Procédé de fabrication selon l'une quelconque des revendications 10 à 12, **caractérisé en ce que** la structuration de la couche d'alignement hétérogène (16) comprend les étapes consistant à :
- se munir d'un tampon (26) présentant une structure en relief (28) dont l'image correspond à celle du réseau recherché (16);
- déposer successivement sur le substrat (4, 6)-un film (22) d'un matériau induisant un alignement planaire des molécules de cristal liquide (1), puis une couche (24) d'un matériau dans laquelle l'image de la structure en relief (28) peut être transférée;
- empreindre la couche de matériau (24) au moyen du tampon (28) pour transférer l'image de la structure en relief (28) dans ladite couche de matériau (24);
- démouler le tampon (26) de sorte que la couche de matériau (24) présente une succession de tranchées (30);
- éliminer par attaque ionique le reliquat de matériau thermoplastique qui subsiste dans le fond des tranchées (30);
- déposer en phase gazeuse ou à partir d'une solution une couche (34) de matériau induisant un alignement homéotrope, et
- éliminer par arrachement ou par dissolution le matériau thermoplastique résiduel.

14. Procédé de fabrication selon la revendication 13, **caractérisé en ce que** le matériau (24) est un matériau thermoplastique qui est empreint à chaud et sous pression au moyen du tampon (26).

15. Procédé de fabrication selon la revendication 13, **caractérisé en ce que** le matériau (24) est un produit photopolymérisable ou thermodurcissable qui est empreint à basse température et faible pression au moyen du tampon (26), puis qui est polymérisé au moyen d'un rayonnement actinique ou par chauffage durant l'application du tampon.

16. Procédé de fabrication selon l'une quelconque des revendications 10 à 15, **caractérisé en ce que** le matériau induisant un alignement planaire appartient au groupe formé par le dioxyde de silicium, le ZrO₂, l'Al₂O₃, le CaF₂, les polyimides, les polyamides-imides, les polyphénylènes et les polyamides, **en ce que** le matériau induisant un alignement homéotrope est un élément ou une combinaison d'éléments appartenant au groupe formé par le silane fluoré, les silanes à longue chaîne d'alkyl fluorée ou non, les silanes mono, bi ou trifonctionnels ou un élément ou une combinaison d'éléments appartenant au groupe formé par les acides, les alcools, les amines, les amides, les complexes métalliques et les surfactants ayant au moins une longue chaîne alkyl fluorée ou non, et **en ce que** le matériau thermoplastique appartient au groupe formé par le polyméthyl méthacrylate, les polyacrylates, les polycarbonates et les polyamides.
